# EUROPEAN PATENT SPECIFICATION

(11) **EP 0 552 694 B1**
(45) Date of publication and mention of the grant of the patent: **02.01.2002**
(21) Application number: 93100617.5
(22) Date of filing: 16.01.1993
(51) Int. Cl.: H04Q 11/06, H04J 3/16

(54) **Method and circuits for realizing a modular digital cross-connect network**
Verfahren und Schaltungen zur Realisierung eines digitalen und modularen Querverbindungsnetzes
Procédé et circuits pour la réalisation d'un réseau de brassage numérique et modulaire

(30) Priority: 22.01.1992 IT MI108
(43) Date of publication of application: 28.07.1993
(73) Proprietor: ALCATEL, 75008 Paris (FR)
(72) Inventor: Lometti, Alberto, I-22055 Merate (Co) (IT); Valussi, Romano, I-20041 Agrate Brianza (Mi) (IT)
(74) Representative: Colombo, Stefano Paolo

(56) References cited:
- EP-A- 0 384 581
- NTZ NACHRICHTEN TECHNISCHE ZEITSCHRIFT, vol.44, no.10, October 1991, BERLIN (DE) pages 712 - 722, XP265353 BEHRENS ET AL 'NK 2000 Ein Netzknoten für flexible Telekommunicationsnetze'

## Description

The present invention relates to a method of realizing a connection network for SDH (Synchronous Digital Hierarchy) signals, having particular characteristics of modularity, flexibility and protectability against failures.

All synchronous tributaries of lower level standardized by ETSI, i.e. VC12, VC2 and VC3 ("Virtual Container" of level 12, 2 and 3) are switchable signals and therefore the invention assumes the form of a possible realization of the LPC (Lower Path Connection) function contemplated by CCITT G783 specification for SDH standard compatible multiplexers.

The invention concerns also the devices for implementing the network conceived on the ground of said method.

### STATE OF THE ART

The intelligence of switching and protection of information flows carried in the public and private communication networks in the last ten years has been subjected to a migration from the switching exchanges to transmission equipments at a higher and higher frequency.

The network which at the beginning of the eighties was substantially based upon:
- switching means with function of sorting the information traffic;
- multiplexing means for the "gruming" of the traffic and nationalization of the transport;
- real transmission means with the function of remotizing information also at long distances;
already with the last generations of equipments of the plesiochronous hierarchy was "de facto" updated with new elements called Drop/Insert which are located at the boundary between multiplexing and switching.

The Drop/Insert elements create a static-exchange and protection level which is higher than the one of the switching exchanges.

The introduction in the international standards (CCITT) of the new information transmission standard called SDH (Synchronous Digital Hierarchy) has definitely helped to change the previous idea of the network in which switching and transmission were two absolutely distinct functions into the new vision in which they are deeply interpenetrated. In fact the same format of the standard carries the functionalities which are typical of the control and observation of the transmission lines at the same time the functionalities which are typical of the exchange architecture of information flows.

In particular, the introduction of the VC (Virtual Container) as a basic-information unit and also as exchange unit between several carrying flows allowed to conceive apparatuses for handling such entities which, besides the trasmission functions at the various levels of the new hierarchy, include powerful switching functions of the virtual containers themselves.

These apparatuses are called Cross Connect and Drop/Insert respectively; this description is concerned with the last ones and their detailed functionalities.

Said apparatuses realize the exchange and protection layer better than the one of the exchanges, in a much more versatile way and, thanks to the prescribed standard, in a more controllable way than the previous plesiochronous scenario.

Being a matter of new standards and functionalities, it is difficult to define the state of the art relative to solution of switching problems of virtual containers even if in the literature and in prototypes of apparatuses presented on occasion of international exhibitions the specific switching function of virtual containers which is the special subject of this invention is realized in a "concentrated" way i.e. a particular portion of circuit is dedicated thereto.

Such kind of solution implies that the failure of such portion of circuit jeopardizes irreparably the operation of the whole equipment.

In the proposed solution, the functionality is realized in a "distributed" fashion as will be detailed better and with the advantages set forth in the following description of the invention.

A distributed arrangement is known from EP 0 384 581 (D2) dealing with a cross-connect core switch. D2 teaches a fully accessible (squared) matrix which is obtained through the use of shared busses. D2 uses a decoder as space stage and thus it can process one STM-1 at a time being the space stage static. Finally, the cross-connect according to D2 is a single-stage (Space) or three-stages (Space/Time/Space) arrangement.

### Description of the invention

A first object of the present invention is to provide a method of realizing a modular and distributed structure of a connection network for tributary flows of the Synchronous Digital Hierarchy.

The method according to the invention allows now the maximum flexibility of use from the viewpoint of switching possibilities, since it is fully accessible and not blocking for point-to-point or point-to-multipoint connections, and moreover it is suitable for very efficient implementations as to the protection of the multiplexing apparatus against failure being deprived of a centralized common device.

This and other objects are achieved by the method and circuit according to the invention having the features set forth in claims 1 and 6, respectively. The corresponding dependent claims indicate further advantageous features of the method and circuit according to the invention.

The various aspects and advantages of the invention will be easily understood from the description of the embodiments thereof illustrated in the drawings wherein:
- fig. 1 (a) represents the connection network in its most general form and a possible partialization of the network itself;
- fig. 1 (b) represents the equivalent of a portion of the network in terms of purely spatial matrixes, in special case of frame loading;
- fig. 2 shows how it is possible to extend the concept illustrated in the preceding figures to networks as their complexity becomes greater and greater;
- fig. 3 shows the structure of the temporal stage;
- fig. 4 shows, in case of STM1 (Synchronous Transport Module of level 1) frame, the modified frame which must be supplied as an input to the temporal stage so that the connection network on the whole do not introduce distortions on the standardized frame format.

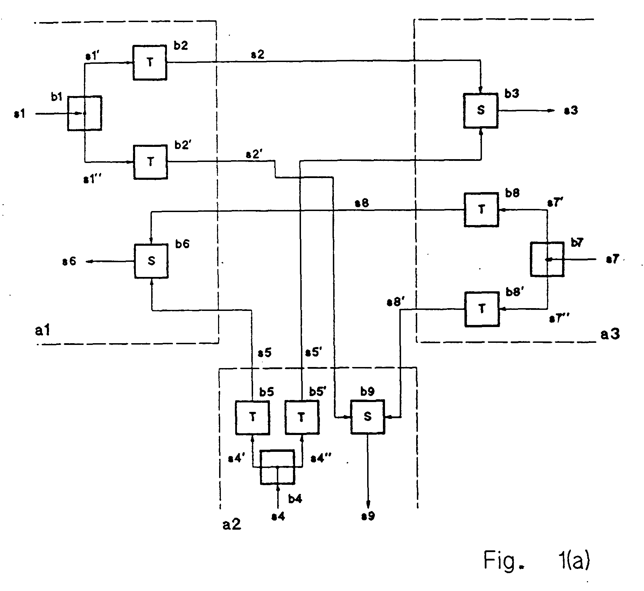

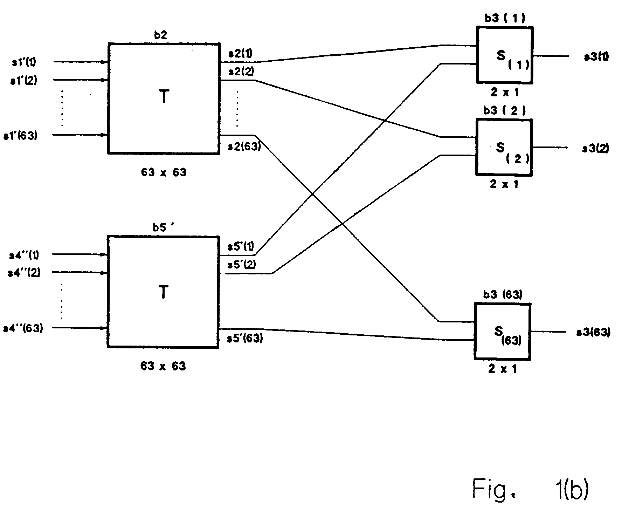

Fig. 1 (a) highlights modularity and symmetry of the proposed solution. The three areas bordered by a broken line indicated by a1, a2 and a3, containing identical structures, represent a possible and advantageous sectioning of the structure.

In one of the preferred implementations of a type Drop/Insert multiplexer, a1 and a3 contain the aggregate processing circuits, side W and side E, while a2 contains the tributary processing circuits.

At any rate signals s1, s4 and s7 structured in such a way as to be able to transport any set of lower order synchronous tributaries contemplated by standard ETSI-SDH, represent the inputs of the connection network. Similarly s3, s6 and s9, corresponding to the preceding ones, rapresent its outputs.

Each area a(i) is characterized by an input and an output of the network, each input "urges" on both the outputs belonging to the other areas, each output can pick up the signal from both the inputs belonging to the other areas. In more detail : inputs s1, s4 and s7 are forked in blocks b1, b4 and b7 and sent to time switching stages b2, b2'; b5, b5'; b8, b8'. The outputs of such blocks are crossed in such a way as s2 and s5, resulted from the time switching of s1 and s4 respectively, urge on space switching block b3 in order to originate the switched signal s3; similarly s5 and s8 urge on space switching block b6 originating the switched signal s6 and finally s2' and s8' urge on switching block b9, whose output is the switched signal s9.

It should be noted that the space switching blocks b3, b6, b9, because of the presence of temporal stages, are actually "S matrici DT" (time division switching spatial matrixes as called e.g. in the book M. Decina - A. Roveri: "Introduzione alle Reti Telefoniche Analogiche e Numeriche", Quaderni di ingegneria, Ed. Goliardiche hereinafter referred as D1); time switching stages b1, b2', etc. on the contrary are complex connection networks, specially constructed in order to allow the specific handling of SDH frames under any load condition and they are described in more detail hereinafter.

An alternative way of describing the network of fig. 1 (a) is to consider it as three identical subnetworks taken together, each of which is formed by two time switching stages, which as a whole realize a two T-S (Time-Space) stage network connection.

In particular, the three subnetworks are individuable in the sets of blocks (b2, b5', b3); (b2', b8', b9); (b5, b8, b6).

In fig. 1 (b) there is illustrated the subnetwork (b2, b5', b3) in the special case when signals s1 and s4, inputs to the network, are STM-1 frames loaded with sixty-three tributaries of the type VC12.

The figure shows a representation of the network in purely spatial terms, quite equivalent to the one of fig. 1 (a), but more suitable to the matrix examination as far as the theory of connection is concerned (see D1).

Signals s1', s4', s2, s5' and s3 are made explicit in the sixty-three separated components that actually are time multiplexed in the sole framed signal. Temporal stages T are constituted by space equivalents for the described case, i.e. by complete space matrix with sixty-three inputs and sixty-three outputs. Space stage S has been replaced by an equivalent structure constituted by sixty-three space matrixes having two inputs and one output (for the equivalence between time matrixes and space matrixes reference can be made to D1). This representation highlights the two-stage structure of the connection network and put its properties in light from the viewpoint of the switching theory.

The network is quite accessible since:
- the number of outputs of the first stage matrixes is equal to the number of matrixes forming the second stage;
- the number of inputs of the second stage matrixes is equal to the number of the matrixes constituting the first stage;
- each matrix of the first stage has a connection path towards each matrix of the second stage;
- moreover the network is not blocking both for point-to-point connection and for point-to-multipoint connections since the multiplicity of connections between the matrixes of the first stage and the second stage ones are equal to the number of outputs of the matrixes of the second stage.

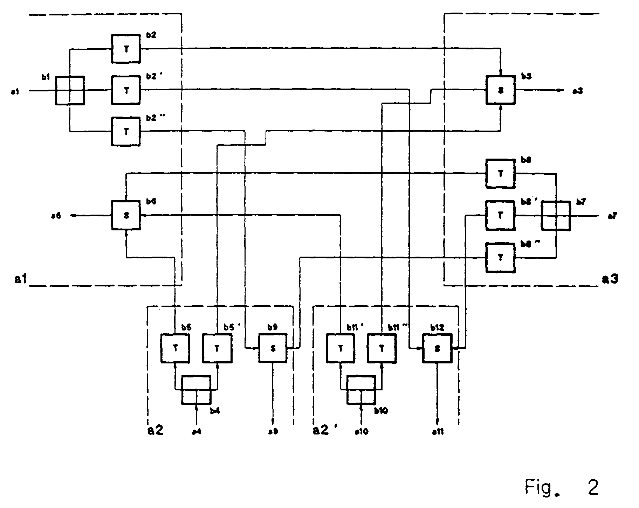

In fig. 2 there is shown how it is possible to extend asymmetrically the previously described network where in one of the three areas it is desired to elaborate a greater number of input-output signals.

In the emphasized case the functions contemplated for the area a2 have been doubled by adding an area a2' identical to the preceding one, and the functions contained in areas a1 and a3 have been changed accordingly in order to maintain the characteristics of complete accessibility and non-blocking of the network.

In particular it is necessary to increase the number of type stages and the number of the inputs of the type S stages. Further increases of network can be realized by iterating the described method.

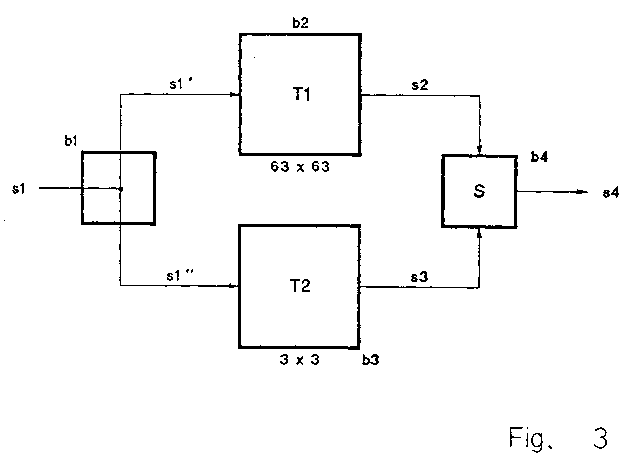

Fig. 3 illustrates the structure of the temporal stage (T-blocks in the preceding figures) which allows to process different types of tributaries present in the SDH frames standardized by ETSI, also in case of mixed paths (e.g. type-VC12 tributaries mixed with type-VC2 and/or VC3 tributaries).

It should be noted that what had been previously indicated as purely temporal stage for simplicity's sake it has been in turn realized as a two-stage cascade, a temporal one composed of two temporal matrixes T1 and T2 of different type, and a space one, composed of an "S matrice DT".

Signal s1, a synchronous frame containing structures of type TUG3 (Tributary Unit Group of level 3), loaded in turn with synchronous tributaries VC3 or a mixture of tributaries type VC2 and VC12, is forked in block b1 and, at the same time, to time division matrixes T1 and T2, the first one a sixty-three input and sixty-three output matrix, the second one a three input/three output matrix.

Indeed matrix T1 is used for processing that part of load structured with tributaries of type VC12 and VC2, characterized by a recurrence of sixty-three bytes, while matrix T2 in the processing of that part of load structured with type-VC3 tributaries, characterized by a recurrence of three bytes.

The space b4 re-forms the outgoing frame s4 by picking up the signal s2 for the position of switched load composed of VC12 and VC2 and by picking up the signal s3 for the portion of switched load composed of VC3. All the operations are controlled through memories containing information relative to the structure of the frame and to the desired switching.

A characteristic feature of the proposed structure consists in that the two temporal matrixes T1 and T2 have effect upon different portions of the processed synchronous frame.

It should be observed now that time division matrixes cause an average delay on the switched signal which is equal to the recurrence of the switching, unless alterations in the sequetiality of the input tributaries (see D1) can be accepted, which is intolerable for the present application.

Consequently the frame portions processed by the two matrixes, which have different recurrence of operation, are subjected to different delays and at the moment of recomposition give size to a frame no longer complying with the standard.

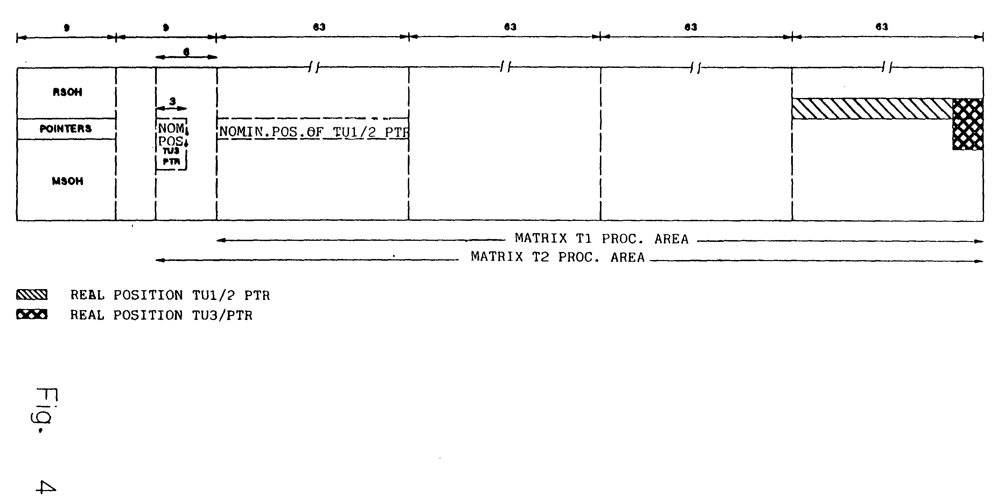

In order to overcome this drawback a reconfiguration of the frame entering the temporal stage of the connection network is operated in the invention according to the scheme illustrated in fig. 4 for the specific case of an STM1 frame.

As it can be seen in the figure, the reconfiguration consists in anticipating the part of load structured with VC12 and VC2 of sixty-three bytes, excluding the portions of frame not processed (and hence not delayed) by matrix T1, and in anticipating the part of load structured with VC3 of three bytes, still excluding the portion of frame not processed by matrix T2.

By operating as described above a frame fully in conformity with the synchronous standard is obtained at the output of space recomposition block b4.

Even if the invention has been described with reference to embodiments thereof illustrated in the drawings for simplicity, it is obvious that these are not limiting but they are susceptible to variations and modifications apparent to those skilled in the art.

## Claims

1. Method of realizing a connection network for Synchronous Digital Hierarchy (SDH) signals comprising SDH frames, in which network low-order virtual containers are processed, **characterized in that** it comprises the following steps:
- providing aggregate (a1, a3) and tributary (a2, a2') subnetworks, each subnetwork (a1; a2, a2'; a3) having a subnetwork input and a subnetwork output for input signals (s1; s4, s10; s7) and output signals (s6; s9, s11; s3), respectively, each subnetwork (a1; a2, a2'; a3) further comprising time switching blocks (b2, b2', b2"; b5, b5', b11', b11"; b8, b8', b8") and space switching blocks (b6; b9, b12; b3);
- forking (b1; b4, b10; b7) the input signals (s1; s4, s10; s7) thus obtaining forked signals (s1', s1", s1'''; s4', s4", s10', s10"; s7', s7", s7"');
- sending the forked (s1', s1", s1'''; s4', s4", s10', s10"; s7', s7", s7"') to the respective time switching blocks (b2, b2', b2"; b5, b5', b11', b11"; b8, b8', b8") so as to obtain processed signals; and
- sending each of the processed signals of one subnetwork (a1; a2, a2'; a3) to the space switching blocks (b3, b6, b9, b12) of the other subnetworks (a3, a2, a2'; a1, a3; a1, a2, a2') thus obtaining the output signals (s6, s9, s11; s3) from each subnetwork (a1; a2, a2'; a3).

2. Method according to claim 1, **characterized in that** it further comprises the step of reconfiguring the SDH frames entering the time switching blocks (b2, b2', b2"; b5, b5', b11', b11"; b8, b8', b8") in order to allow the equalization of the delay introduced on the tributary subnetworks interconnected by the same time switching blocks (b2, b2', b2"; b5, b5', b11', b11"; b8, b8', b8").

3. Method according to claim 2, **characterized in that** the step of reconfiguring the SDH frames entering the time switching blocks comprises the step of advancing by sixty-three bytes that part of load structured with VC12 and VC2 and by advancing by three bytes the part of load structured with VC3.

4. Method according to any of claims 1-3, **characterized in that** the step of providing tributary subnetworks comprises the step of providing a first and a second tributary subnetworks (a2; a2') and **in that** the step of providing aggregate (a1; a3) subnetworks comprises the step of providing two aggregate subnetworks.

5. Method according to any of claims 1-4, **characterized in that** the step of sending the forked signals (s1', s1"; s4', s4"; s7', s7") to the respective time switching blocks (b2, b2'; b5, b5'; b8, b8') comprises the step of sending the forked signals (s1', s1"; s4', s4"; s7', s7") to time switching blocks (T1, T2) and a space switching block (S).

6. Circuit for implementing a connection network for Synchronous Digital Hierarchy (SDH) signals comprising SDH frames, in which network low-order virtual containers are processed, **characterized in that** it comprises:
- aggregate (a1; a3) and tributary (a2, a2') subnetworks, each subnetwork (a1; a2, a2'; a3) having a subnetwork input and a subnetwork output for input signals (s1; s4, s10; s7) and output signals (s6, s9, s11; s3), respectively, each subnetwork (a1; a2, a2'; a3) further comprising time switching blocks (b2, b2', b2"; b5, b5',b11', b11"; b8, b8', b8") and space switching blocks (b6; b9, b12; b3);
- fork means (b1; b4, b10; b7) for forking the input signals (s1; s4, s10; s7);
- means for connecting the fork means (b1; b4, b10; b7) and the time switching (b2, b2', b2"; b5, b5',b11', b11"; b8, b8', b8"); and
- means for connecting the time switching blocks (b2, b2', b2"; b5, b5',b11', b11"; b8, b8', b8") of one subnetwork (a1; a2, a2'; a3) to the space switching blocks (b3, b6, b9, b12) of the other subnetworks (a3, a2, a2'; a1, a3; a1, a2, a2').

7. Circuit according to claim 6, **characterized in that** the tributary subnetwork comprises a first and a second tributary subnetworks (a2; a2').

8. Circuit according to claim 7, **characterized in that** the time switching blocks (b2, b2'; b5, b5'; b8, b8') comprise time switching blocks (T1, T2) and a space switching block (S).

## Patentansprüche

1. Verfahren zum Realisieren eines Verbindungsnetzwerks für Synchronous Digital Hierarchy-(SDH)-Signale mit SDH-Rahmen, in denen virtuelle Container niedriger Ordnung des Netzwerks verarbeitet werden, **dadurch gekennzeichnet, dass** es die folgenden Schritte umfasst:
- Vorsehen von Aggregat- (a1, a3) und Neben- (a2, a2') -Unternetzwerken, wobei jedes Unternetzwerk (a1; a2, a2'; a3) einen Unternetzwerkeingang und einen Unternetzwerkausgang für Eingangssignale (s1; s4, s10; s7) bzw. Ausgangssignale (s6; s9, s11; s3) hat und jedes Unternetzwerk (a1; a2, a2'; a3) ferner Zeitschaltblöcke (b2, b2', b2"; b5, b5', b11', b11"; b8, b8', b8") und Raumschaltblöcke (b6; b9, b12; b3) umfasst;
- Gabeln (b1; b4, b10; b7) der Eingangssignale (s1; s4, s10; s7), wodurch gegabelte Signale (s1', s1", s1"'; s4', s4", s10', s10"; s7', s7", S7'") erhalten werden;
- Senden der gegabelten [Signale] (s1', s1", s1"'; s4', s4", s10', s10"; s7', s7", s7"') an die jeweiligen Zeitschaltblöcke (b2, b2', b2"; b5, b5', b11', b11"; b8, b8', b8"), um so verarbeitete Signale zu halten; und
- Senden jedes verarbeiteten Signals eines Unternetzwerks (a1; a2, a2'; a3) an die Raumschaltblöcke (b3, b6, b9, b12) der anderen Unternetzwerke (a3, a2, a2'; a1, a3; a1, a2, a2'), um so die Ausgangssignale (s6, s9, s11; s3) von jedem Unternetzwerk (a1; a2, a2'; a3) zu erhalten.

2. Verfahren nach Anspruch 1, **dadurch gekennzeichnet, dass** es ferner den Schritt des Rekonfigurierens der in die Zeitschaltblöcke (b2, b2', b2"; b5, b5', b11', b11"; b8, b8', b8") eintretenden SDH-Rahmen umfasst, um den Ausgleich der in den Neben-Unternetzwerken, die durch die gleichen Zeitschaltblöcke (b2, b2', b2"; b5, b5', b11', b11"; b8, b8', b8") miteinander verbunden sind, herbeigeführten Verzögerung zu ermöglichen.

3. Verfahren nach Anspruch 2, **dadurch gekennzeichnet, dass** der Schritt des Rekonfigurierens der in die Zeitschaltblöcke eintretenden SDH-Rahmen den Schritt des Vorziehens des mit VC12 und VC2 strukturierten Teils der Nutzlast um 63 Bytes und des Vorziehens des mit VC3 strukturierten Teils der Nutzlast um 3 Bytes umfasst.

4. Verfahren nach einem beliebigen der Ansprüche 1 bis 3, **dadurch gekennzeichnet, dass** der Schritt des Bereitstellens von Neben-Unternetzwerken den Schritt des Bereitstellens eines ersten und eines zweiten Neben-Unternetzwerks (a2; a2') umfasst, und dass der Schritt des Bereitstellens von Aggregat-Unternetzwerken (a1; a3) den Schritt des Bereitsstellens von zwei Aggregat-Unternetzwerken umfasst.

5. Verfahren nach einem beliebigen der Ansprüche 1 bis 4, **dadurch gekennzeichnet, dass** der Schritt des Sendens der gegabelten Signale (s1', s1"; s4', s4"; s7', s7") an die jeweiligen Zeitschaltblöcke (b2, b2'; b5, b5'; b8, b8') den Schritt des Sendens der gegabelten Signale (s1', s1"; s4', s4"; s7', s7") an Zeitschaltblöcke (T1, T2) und einen Raumschaltblock (S) umfasst.

6. Schaltung zum Implementieren eines Verbindungsnetzwerks für Synchronous Digital Hierarchy-(SDH)-Signale mit SDH-Rahmen, in denen virtuelle Container niedriger Ordnung des Netzwerks verarbeitet werden, **dadurch gekennzeichnet, dass** sie umfasst:
- Aggregat- (a1, a3) und Neben- (a2, a2') - Unternetzwerke, wobei jedes Unternetzwerk (a1; a2, a2'; a3) einen Unternetzwerkeingang und einen Unternetzwerkausgang für Eingangssignale (s1; s4, s10; s7) bzw. Ausgangssignale (s6; s9, s11; s3) hat, und jedes Unternetzwerk (a1; a2, a2'; a3) ferner Zeitschaltblöcke (b2, b2', b2"; b5, b5', b11', b11"; b8, b8', b8") und Raumschaltblöcke (b6; b9, b12; b3) umfasst;
- Gabelungsmittel (b1; b4, b10; b7) zum Gabeln der Eingangssignale (s1; s4, s10; s7);
- Mittel zum Verbinden der Gabelungsmittel (b1; b4, b10; b7) und der Zeitschalt[blöcke] (b2, b2', b2"; b5, b5', b11', b11"; b8, b8', b8"); und
- Mittel zum Verbinden der Zeitschaltblöcke (b2, b2', b2"; b5, b5', b11', b11"; b8, b8', b8") eines Unternetzwerks (a1; a2, a2'; a3) mit den Raumschaltblöcken (b3, b6, b9, b12) der anderen Unternetzwerke (a3, a2, a2'; a1, a3; a1, a2, a2').

7. Schaltung nach Anspruch 6, **dadurch gekennzeichnet, dass** das Neben-Unternetzwerk ein erstes und ein zweites neben-Unternetzwerk (a2; a2') umfasst.

8. Schaltung nach Anspruch 7, **dadurch gekennzeichnet, dass** die Zeitschaltblöcke (b2, b2'; b5, b5'; b8, b8') Zeitschaltblöcke (T1, T2) und einen Raumschaltblock (S) umfassen.

## Revendications

1. Procédé de réalisation d'un réseau de connexion pour des signaux à hiérarchie numérique synchrone (SDH) comprenant des trames SDH, réseau dans lequel des conteneurs virtuels d'ordre peu élevé sont traités, **caractérisé en ce qu'**il comprend les étapes suivantes consistant à :
- fournir des sous-réseaux d'agrégats (a1, a3) et d'affluents (a2, a2'), chaque sous-réseau (a1 ; a2, a2' ; a3) présentant une entrée de sous-réseau et une sortie de sous-réseau pour des signaux d'entrée (s1 ; s4, s10 ; s7) et des signaux de sortie (s6 ; s9, s11 ; s3), respectivement, chaque sous-réseau (a1 ; a2, a2' ; a3) comprenant en outre des blocs de commutation temporelle (b2, b2', b2" ; b5, b5', b11', b11" ; b8, b8', b8") et des blocs de commutation spatiale (b6 ; b9, b12 ; b3) ;
- bifurquer (b1 ; b4, b10 ; b7) les signaux d'entrée (s1 ; s4, s10 ; s7) pour obtenir ainsi des signaux bifurqués (s1' ; s1", s1"' ; s4', s4", s10', s10" ; s7', s7", s7"') ;
- envoyer les signaux bifurqués (s1', s1", s1''' ; s4', s4", s10', s10" ; s7', s7'', s7"') aux blocs de commutation temporelle (b2, b2', b2" ; b5, b5', b11', b11" ; b8, b8', b8") respectifs de manière à obtenir des signaux traités ; et
- envoyer chacun des signaux traités d'un sous-réseau (a1 ; a2, a2' ; a3) aux blocs de commutation spatiale (b3, b6, b9, b12) des autres sous-réseaux (a3, a2, a2' ; a1, a3 ; a1, a2, a2') pour obtenir ainsi les signaux de sortie (s6, s9, s11 ; s3) de chaque sous-réseau (a1 ; a2, a2' ; a3).

2. Procédé selon la revendication 1, **caractérisé en ce qu'**il comprend en outre l'étape consistant à reconfigurer les trames SDH entrant dans les blocs de commutation temporelle (b2, b2', b2" ; b5, b5', b11', b11" ; b8, b8', b8") afin de permettre l'égalisation du retard introduit sur les sous-réseaux d'affluents interconnectés par les mêmes blocs de commutation temporelle (b2, b2', b2" ; b5, b5', b11', b11" ; b8, b8', b8").

3. Procédé selon la revendication 2, **caractérisé en ce que** l'étape consistant à reconfigurer les trames SDH entrant dans les blocs de commutation temporelle comprend l'étape consistant à faire avancer de soixante-trois octets la partie de charge structurée avec des VC12 et VC2 et à faire avancer de trois octets la partie de charge structurée avec des VC3.

4. Procédé selon l'une quelconque des revendications 1 à 3, **caractérisé en ce que** l'étape consistant à fournir des sous-réseaux d'affluents comprend l'étape consistant à fournir des premier et deuxième sous-réseaux d'affluents (a2 ; a2'), et **en ce que** l'étape consistant à fournir des sous-réseaux d'agrégats (a1 ; a3) comprend l'étape consistant à fournir deux sous-réseaux d'agrégats.

5. Procédé selon l'une quelconque des revendications 1 à 4, **caractérisé en ce que** l'étape consistant à envoyer les signaux bifurqués (s1' ; s1" ; s4', s4" ; s7', s7") aux blocs de commutation temporelle (b2, b2'; b5, b5'; b8, b8') respectifs comprend l'étape consistant à envoyer les signaux bifurqués (s1', s1" ; s4', s4" ; s7', s7") à des blocs de commutation temporelle (T1, T2) et à un bloc de commutation spatiale (S).

6. Circuit pour implémenter un réseau de connexion pour des signaux à hiérarchie numérique synchrone (SDH) comprenant des trames SDH, réseau dans lequel des conteneurs virtuels d'ordre peu élevé sont traités, **caractérisé en ce qu'**il comprend :
- des sous-réseaux d'agrégats (a1 ; a3) et d'affluents (a2, a2'), chaque sous-réseau (a1 ; a2, a2' ; a3) présentant une entrée de sous-réseau et une sortie de sous-réseau pour des signaux d'entrée (s1 ; s4, s10 ; s7) et des signaux de sortie (s6, s9, s11 ; s3), respectivement, chaque sous-réseau (a1 ; a2, a2' ; a3) comprenant en outre des blocs de commutation temporelle (b2, b2', b2" ; b5, b5', b11', b11" ; b8, b8', b8") et des blocs de commutation spatiale (b6 ; b9, b12 ; b3) ;
- des moyens de bifurcation (b1 ; b4, b10 ; b7) pour bifurquer les signaux d'entrée (s1 ; s4, s10 ; s7);
- des moyens pour connecter les moyens de bifurcation (b1 ; b4, b10 ; b7) et les blocs de commutation temporelle (b2, b2', b2" ; b5, b5', b11', b11" ; b8, b8', b8") ; et
- des moyens pour connecter les blocs de commutation temporelle (b2, b2', b2" ; b5, b5', b11', b11" ; b8, b8', b8") d'un sous-réseau (a1 ; a2, a2' ; a3) aux blocs de commutation spatiale (b3, b6, b9, b12) des autres sous-réseaux (a3, a2, a2' ; a1, a3 ; a1, a2, a2').

7. Circuit selon la revendication 6, **caractérisé en ce que** les sous-réseaux d'affluents comprennent des premier et deuxième sous-réseaux d'affluents (a2 ; a2'), et **en ce que** les sous-réseaux d'agrégats (a1 ; a3) comprennent deux sous-réseaux d'agrégats (a1 ; a3).

8. Circuit selon la revendication 7, **caractérisé en ce que** les blocs de commutation temporelle (b2, b2'; b5, b5'; b8, b8') comprennent des blocs de commutation temporelle (T1, T2) et un bloc de commutation spatiale (S) .
